# EUROPEAN PATENT SPECIFICATION

(11) **EP 2 799 253 B1**
(45) Date of publication and mention of the grant of the patent: **06.09.2017**
(21) Application number: 12863293.2
(22) Date of filing: 28.12.2012
(51) Int. Cl.: B60C 11/00, B29C 33/02, B29C 35/02, B29L 30/00, B29D 30/06, B29C 33/42, B29C 37/00, B29D 30/66

(54) **TIRE AND TIRE-FORMING MOLD**
REIFEN UND REIFENFORMVERFAHREN
PNEUMATIQUE ET MOULE À PNEUMATIQUE

(30) Priority: 28.12.2011 JP 2011289578
(43) Date of publication of application: 05.11.2014
(73) Proprietor: Bridgestone Corporation, Tokyo 104-8340 (JP)
(72) Inventor: WATABE, Ryoichi, Kodaira-shi Tokyo 187-8531 (JP)
(74) Representative: Oxley, Robin John George
(86) International application number: PCT/JP2012/084305
(87) International publication number: WO 2013/100198

(56) References cited:
- EP-A2- 2 028 023
- WO-A1-2011/118856
- JP-A- H02 147 411
- JP-A- H05 318 621
- JP-A- H05 318 621
- JP-A- H07 257 111
- JP-A- 2004 189 195

## Description

### TECHNICAL FIELD

The present invention relates to tires and tire forming molds, and more particularly, to tires that are excellent in on-ice performance and on-snow performance, and tire forming molds used for manufacturing the same.

### BACKGROUND ART

Conventionally, various contrivances have been made for improving the on-ice performance and on-snow performance of winter tires.
For example, a technology which increases edge components present in a contact patch and simultaneously improves the snow-gripping effect and the travelling performance on icy and snowy roads (iced road surfaces and snowed road surfaces) of tires, by providing a plurality of sipes on each block formed on a tread, is proposed in JP 2002-192914 A (PTL 1).
In addition, for example, JP H11-301217 A (PTL 2) proposes a technology which uses foamed rubber as a cap rubber on a tire having a tread rubber with a so-called cap-and-base structure comprising a cap rubber and a base rubber, thereby significantly improving the drainage performance and the on-ice performance and on-snow performance of the tire.

Also, for example, JP 2009-67378 A (PTL 3) proposes, as is shown in FIG. 1(a), for the surface properties of the tread 1 of the tire, a technology which increases the roughness of the surface, increases the frictional force between the tire surface and a road surface, and improves the on-ice performance and on-snow performance of the tire, by providing protrusions 2 with a sharp-ended shape on the surface of the tread portion. JP07-257111 discloses tire molds for preparing tires for use on snowy or icy roads. EP2028023 discloses tires with a roughness profile skewness of zero or greater for providing high braking performance and high pulling capacity. WO2011/118856 discloses a tire with protrusions.

### CITATION LIST

### Patent Literature

PTL 1: JP 2002-192914 A
PTL 2: JPH11-301217 A
PTL 3: JP 2009-67378 A

### SUMMARY OF INVENTION

### (Technical Problem)

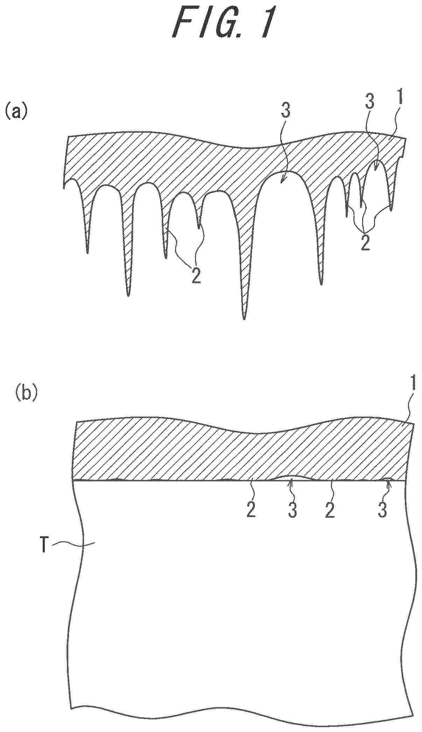

However, in the technology disclosed in PTL 1 which provides sipes on each block, there is a problem that if the number of sipes is increased too much, the block rigidity will be decreased and collapsing of a block may easily happen, which causes a reduction in the ground contact area and, rather, degrades the on-ice performance and on-snow performance.
In addition, in the technology disclosed in PTL 2 using foamed rubber for the cap rubber, there are cases where a reduction in the rigidity of the entire blocks is caused by usage of foamed rubber, so that the wear resistance of the tire is not always sufficient.
Further, in the technology disclosed in PTL 3 which provides protrusions with a sharp-ended shape on the surface of the tread portion, due to the fact that the rigidity of the protrusion is low, there are cases where the protrusions collapse and the desired performance cannot be obtained, particularly when a large load is placed on the tire, such as when the load on the front wheel is increased due to nose diving of the vehicle, etc. Namely, in the technology providing protrusions with a sharp-ended shape on the surface of the tread portion, there are cases that protrusions 2 collapse due to the contacting with road surface T, the volume of gap 3 for water removing is reduced, the drainage performance is lowered, and consequently the desired on-ice performance and on-snow performance may not be obtained, as is shown in FIG. 1(b). Therefore, there is still room for further improvement of the on-ice performance and on-snow performance in the technology disclosed in PTL 3. In addition, as the result of repeated study by the inventor on tires applying the technologies disclosed in PTL 1-3, a problem is also found that the on-ice performance and on-snow performance cannot be sufficiently obtained on those conventional tires, particularly new tires, though the reason is not clear. Therefore, there is still room for further improvement of the on-ice performance and on-snow performance of, in particular, new tires, in the technologies disclosed in PTL 1-3.

An object of the present invention is to solve the aforementioned problems, and to provide a tire with improved on-ice performance and on-snow performance and a tire forming mold used for manufacturing (forming) the tire.

### (Solution to Problem)

The inventor has intensively studied to solve the problems aforementioned.
As a result, the present inventor has completed the present invention by finding that by forming a predetermined microstructure on the surface of the tread, it is possible to suppress the reduction of the block rigidity and the drainage performance of a tire, thereby to obtain further improved on-ice performance and on-snow performance of the tire, and to allow the tire to exhibit sufficient on-ice performance and on-snow performance even when the tire is brand new.

The present invention is made based on the findings above, and the primary features thereof are summarized as follows.
The present invention provides a tire having a large number of protrusions partitioned by recesses extending in a mesh pattern on at least a part of the tread surface, each of the recesses having a recess width of 50µm or less, characterised in that the protrusions have a hemispherical shape.
In this way, by forming a large number of protrusions partitioned by the recesses extending in a mesh pattern on at least a part of the tread surface, it will be possible to improve the drainage performance and simultaneously improve the on-ice performance and on-snow performance of the tire. In addition, by setting the recess width to be 50µm or less, it will be possible to improve the drainage performance, and simultaneously increase the frictional force between the tread surface and a road surface sufficiently, while ensuring the rigidity of the protrusions.
As used herein, the term "recess width" refers to the minimum distance across a recess between the adjacent protrusions on the tread surface when viewed from the outside in the tire radial direction (hereinafter, "recess width" is also referred to as "distance between protrusions"). And the "recess width" may be measured by, for example, imaging the tread surface with an electronic microscope.In addition, "tread surface" refers to a surface of a tire that comes in contact with a flat plate upon application of a load corresponding to a predetermined load to the tire when installed on an approved rim, set to a predetermined air pressure, and vertically placed on the flat plate in a stationary state. Note that "approved rim" refers to a rim that is in accordance with standards where the tire is produced and used, and specified by JATMA (The Japan Automobile Tyre Manufacturers Association, Inc.) Yearbook in Japan, ETRTO (European Tyre and Rim Technical Organisation) Standards Manual in Europe, and TRA (The Tire and Rim Association Inc.) Yearbook in the U.S., "predetermined load" refers to a maximum tire load specified by the aforementioned standards of JATMA etc., and "predetermined air pressure" refers to an air pressure (maximum air pressure) corresponding to a predetermined load of a tire with an approved size.

In addition, the tire forming mold of the present invention is a tire forming mold, characterized by having a tread-surface molding surface for molding the tread surface of a tire, and in that a large number of recesses partitioned by protrusions extending in a mesh pattern are formed on at least a part of the tread-surface molding surface, and each of the protrusions has a protrusion width of 50µm or less, characterised in that the recesses have a hemispherical shape.
In this way, by forming a large number of recesses partitioned by protrusions extending in a mesh pattern on at least a part of the tread-surface molding surface, and by setting the protrusion width to be 50µm or less, it is possible to form a tire that has recesses extending in a mesh pattern with a predetermined width on at least a part of the tread surface and that is excellent in on-ice performance and on-snow performance.
As used herein, "protrusion width" refers to the minimum distance across a protrusion between the adjacent recesses on the tread surface when viewed from the outside in the tire radial direction (hereinafter, "protrusion width" is also referred to as "distance between recesses"). Additionally, the "protrusion width" may be measured, for example, by imaging the tread-surface molding surface with an electronic microscope.

### (Advantageous Effect of Invention)

According to the present invention, it is possible to provide a tire with improved on-ice performance and on-snow performance and also a tire forming mold that can be used for forming the same.

### BRIEF DESCRIPTION OF DRAWINGS

The present invention will be further described below with reference to the accompanying drawings, wherein:
FIG. 1(a) is a schematic sectional view schematically showing the tread surface of a conventional tire, and FIG. 1(b) is a schematic sectional view schematically showing the state where the tread surface of a tire comes in contact with a road surface when a load is placed on the tire.
FIG. 2 is a sectional view of the tire according to an embodiment of the present invention taken along the tire width direction.
FIG. 3 schematically shows an enlarged view of the shape of a part of the tread surface of the tire shown in FIG. 2, where (a) is a plan view and (b) is a sectional view taken along the tire width direction.
FIG. 4 shows an SEM image (Scanning Electron Microscope image) of the tread surface of the tire shown in FIG. 2.
FIG. 5 is a schematic perspective view schematically showing a part of the tire forming mold according to an embodiment of the present invention.
FIG. 6 schematically shows an enlarged view of the shape of a part of the tread forming surface of the tire forming mold shown in FIG. 5, where (a) is a plan view and (b) is a sectional view taken along the width direction.
FIGS. 7(a) to (c) illustrate reference examples of the shape of a part of the tread surface of the tire.
FIGS. 8(a) and (b) are diagrams to explain about the volume and size of a protrusion.

### DESCRIPTION OF EMBODIMENTS

The tire and the tire forming mold of the present invention is explained hereinafter. The tire of the present invention is characterized in that a predetermined microstructure is formed on at least a part of the tread surface (the surface that contacts a road surface) of the tread portion, and the tread portion has predetermined surface properties (tread surface properties). Additionally, the tire forming mold of the present invention is used for manufacturing the tire of the present invention, characterized in that the tread-surface molding surface has predetermined surface properties by forming a predetermined microstructure on the inner surface of the mold, specifically at least a part of the tread-surface molding surface for molding the tread surface of the tire.

### <Tire>

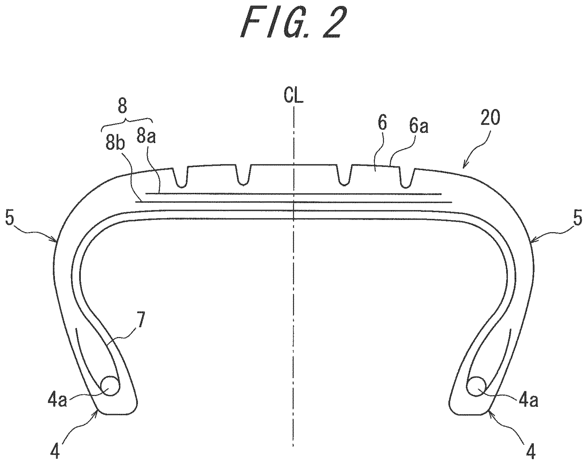

FIG. 2 is a sectional view of the tire according to an embodiment of the present invention taken along the tire width direction. As is shown in FIG. 2, a tire 20 according to an embodiment of the present invention has a pair of bead portions 4, a pair of sidewall portions 5, each extending outwardly in the tire radial direction from each bead portion 4, and a tread portion 6 extending between the sidewall portions 5. In addition, the tire 20 has a carcass 7 toroidally extending between a pair of bead cores 4a which are embedded in the pair of bead portions 4, and a belt 8 including belt layers 8a and 8b which are disposed on the outside of the carcass 7 in the tire radial direction. Further, a tread rubber made from non-foamed rubber is disposed on the outside of belt 8 in the tire radial direction.

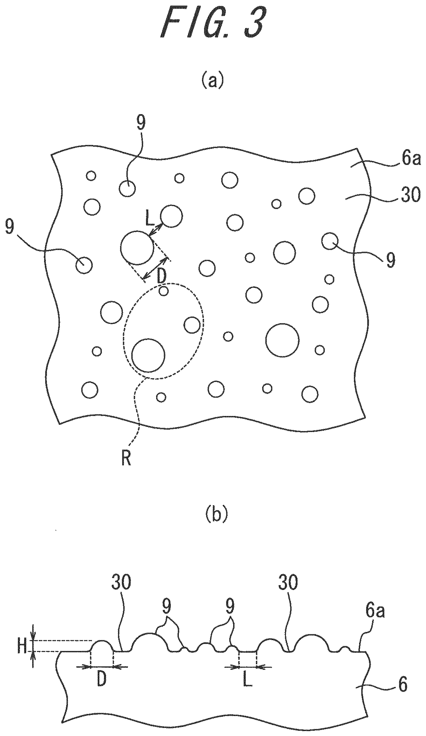

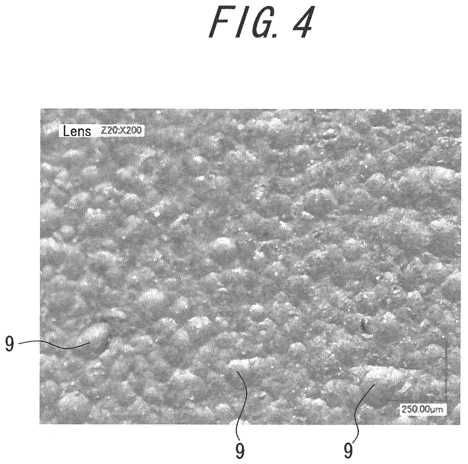

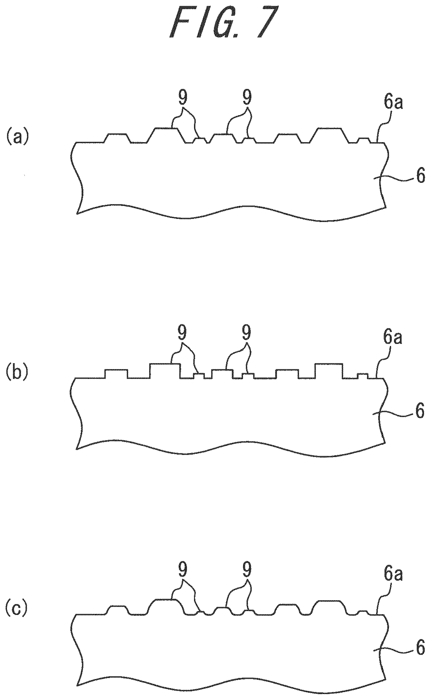

Here, micro protrusions with a predetermined shape are formed on at least a part of the tread surface (in this embodiment, the entire tread surface) of the tire 20. Specifically, according to an enlarged plan view of a surface 6a of the tread portion 6 shown in FIG. 3(a), an enlarged view of the tread portion 6 on the surface 6a side along the tire width direction shown in FIG. 3(b), and an SEM image of a part of the tread surface shown in FIG. 4, the tire according to this embodiment has micro protrusions (projections) 9 partitioned by recesses 30 extending in a mesh pattern on the entire surface 6a of the tread portion 6. Further, although FIG. 3 shows that the protrusions 9 are hemispherical protrusions in the tire of the present invention. Reference protrusions of various shapes, such as trapezoidal cross section shapes are shown in FIG. 7(a), including truncated conical shape and truncated pyramidal shape, rectangular cross section shapes as shown in FIG. 7(b), including cylindrical shape and prismatic shape, and truncated hemispherical shapes as shown in FIG. 7(c).

Additionally, the tire 20 has a large number of protrusions (projections) 9 partitioned by recesses 30 extending in a mesh pattern on at least a part of the tread surface, where the width of each of the recesses needs to be 50µm or less.
In this way, the recesses 30 extending in a mesh pattern are formed on at least a part of the tread surface, and therefore, it is possible to remove a water film on a road surface (to allow the tire to exhibit a better drainage performance) by utilizing the gaps provided by the recesses when the tire comes in contact with the road surface. In addition, a large number of protrusions 9 are formed, and therefore, it is possible to improve the on-ice performance and on-snow performance of the tire by increasing the frictional force between the tread surface and the road surface. Further, if the width L of the recesses 30 is set to be 50µm or less, the width of the recesses 30, namely the distance between the adjacent protrusions will not be increased too much. Therefore, it is possible to improve the drainage performance, and simultaneously increase the frictional force between the tread surface and the road surface sufficiently, while ensuring the rigidity of the protrusions.

Here, it is preferable that the width of the recesses 30 is set to be 5µm or more. In this way, if the width L of the recesses 30 is set to be 5µm or more, it is possible to ensure that gaps are provided by the recesses 30 for ensuring drainage performance.

In addition, it is preferable that the external diameter D of the protrusions (projections) 9 partitioned by the recesses extending in a mesh pattern is set in the range of 5µm to 70µm. If the external diameter D of the protrusions 9 is set to be 5µm or more, the rigidity of the protrusions can be ensured, and even in the case that a large load is placed on the tire, the protrusions are unlikely to collapse, and therefore the drainage performance may be ensured. If the external diameter D of the protrusions 9 is set to be 70µm or less, it is possible to improve the drainage performance by ensuring the volume of the gaps among protrusions.
As used herein, the term "recess width" refers to the minimum distance L across a recess 30 between the adjacent protrusions 9 in the plan view of the tread surface, as shown in FIG. 3(a). In addition, "protrusion external diameter" refers to the maximum diameter D of the protrusions 9 in the plan view of the tread surface, as shown in FIG. 3(a). Additionally, the "recess width" and "protrusion external diameter" may be measured, for example, by imaging the tread surface with an electronic microscope.

In addition, it is preferable that on at least a part of the tread surface of the tire 20, the protrusions 9 are formed with a number density of 80 to 320/mm². Thereby, it is possible to suppress the reduction of the block rigidity and the drainage performance, and simultaneously improve the on-ice performance and on-snow performance of the tire sufficiently.
On the tire 20, the protrusions 9 are formed with a number density of 80/mm² or higher, and therefore, when the tread surface comes in contact with a road surface, it is possible to remove any water film on the road surface (to allow the tire to exhibit a better drainage performance) by utilizing the gaps among the protrusions 9. In addition, it is possible to improve the on-ice performance and on-snow performance of the tire by increasing the frictional force between the tread surface and the road surface. In addition, on the tire 20, the number density of the protrusions 9 is set to be 320/mm² or lower, and therefore the rigidity of the protrusions 9 may be ensured, and even in the case that a large load is placed on the tire, the protrusions 9 are unlikely to collapse, and consequently the drainage performance may be ensured. In addition to this, even in the case that a large number of protrusions 9 are formed, it is possible to ensure a sufficient volume of gaps among the protrusions 9 for improving the drainage performance.

Further, for the tire 20, it is possible to exhibit sufficient on-ice performance and on-snow performance even when it is new (in unused state), although the reason is not clear.
Therefore, with the tire 20, it is possible to further improve the on-ice performance and on-snow performance of the tire even when it is new, by suppressing the reduction of the block rigidity and the drainage performance.

Further, for the tire of the present invention, it is preferable that the protrusions are formed with a number density of 80 to 320/mm² in the range of 90% or more of the area of the tread surface. If the protrusions are formed in the range of 90% or more of the area of the tread surface with a predetermined number density, it is possible to sufficiently increase the effect obtained by forming the protrusions.

Here, for the tire 20, it is preferable that the protrusions 9 are formed with a number density of 150 to 250/mm². If the number density of the protrusions 9 are set to be 150/mm² or more, it is possible to improve the on-ice performance and on-snow performance of the tire by increasing the frictional force between the tread surface and the road surface. In addition, if the number density of the protrusions 9 is set to be 250/mm² or less, it is possible to improve the drainage performance by sufficiently ensuring the rigidity of the protrusions 9 and a sufficient volume of gaps among the protrusions 9.

In addition, for the tire 20, the protrusions 9 have a hemispherical shape. When the protrusions 9 have a hemispherical shape, the protrusions 9 are unlikely to collapse and the drainage performance may be ensured.

Further, for the tire 20, as shown in FIG. 3(b), the height H of the protrusions 9 formed on the tread surface is 1µm to 50µm. If the height H is set to be 1µm or more, it is possible to improve the drainage performance by ensuring a sufficient volume of gaps among the protrusions 9. In addition, if the height H of the protrusions 9 is set to be 50µm or less, it is possible to sufficiently ensure the drainage performance by increasing the rigidity of the protrusions 9.
Here, the height of the protrusions 9 refers to the distance along the tire radial direction between a first imaginary plane perpendicular to a tire radial direction line extending across the distal ends of the protrusions 9 (the outer ends in the tire radial direction), and a second imaginary plane closest to the first imaginary plane among the imaginary planes contacting the outer contour line of the protrusions 9 and perpendicular to the tire radial direction line. Note that the height of the protrusions 9 may be measured with an SEM or microscope.

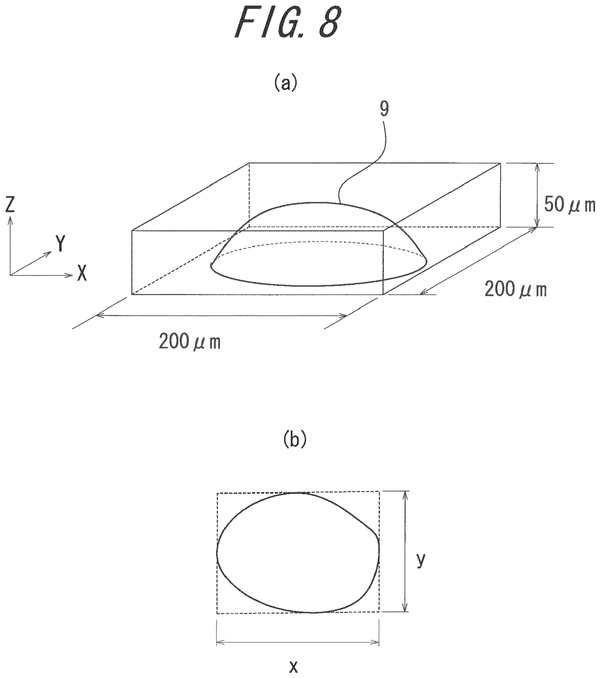

Further, on at least a part of the tread surface of the tire 20, protrusions with a volume of 4×10⁵µm³ or more are formed with a number density of 80/mm² or more, and the conditions that x≤200µm, y≤ 200µm, and 1<z≤50µm are satisfied, where x is a first width (µm) which represents the maximum width of each protrusion, y is a second width (µm) which represents the maximum width of the protrusion in the direction perpendicular to the direction in which the first width is measured, and z is the height (µm) of the same. Wherein, x and y need to be perpendicular to z (see FIGS. 8(a) and (b)). Thereby, it is possible to further suppress the reduction of the block rigidity and the drainage performance, and simultaneously improve the on-ice performance and on-snow performance of the tire.
Namely, on at least a part of the tread surface of the tire 20, protrusions with a volume of 4×10⁵µm³ or more and satisfying the conditions that x≤200µm, y≤200µm, and 1<z≤50µm are formed with a number density of 80/mm² or more, where x is a first width (µm) which is the maximum width of each protrusion, y is a second width (µm) which is the maximum width of the protrusion in the direction perpendicular to the direction in which the first width is measured, and z is the height (µm) of the same, and therefore, it is possible to suppress the reduction of the block rigidity and the drainage performance, and simultaneously improve the on-ice performance and on-snow performance of the tire sufficiently.
Namely, on the surface properties of the tread surface, protrusions with a volume of 4×10⁵µm³ or more within an imaginary square (200µm × 200µm × 50µm) shown in FIG. 8(a) are formed on at least a part of the tread surface with a number density of 80/mm² or more. Therefore, it is possible to ensure the space for removing water between the protrusions, and simultaneously, each protrusion may be brought into contact relatively uniformly with the road surface to thereby ensure a sufficient ground contact area of the protrusions.

Further, for the tire of the present invention, although protrusions with a volume less than 4×10⁵µm³ or protrusions with a shape not satisfying the conditions that x≤200µm, y≤200µm and 1<z≤50µm may also be formed on the tread surface, it is preferable that the number of protrusions not satisfying the aforementioned conditions is 10% or less of the total number of protrusions. If the protrusions not satisfying the aforementioned conditions are present in 10% or less, the aforementioned effect may be achieved sufficiently.

Herein, for the tire 20, for the same reason, it is preferable that the number density of the protrusions with a volume of 4×10⁵µm³ or more and satisfying the conditions that x≤200µm, y≤200µm and 1<z≤50µm is 150/mm² or more, and more preferably, 150/mm² or more and less than 250/mm² is desirable. In addition, it is preferable that the volume of the protrusion is 5×10⁵µm³ or more.
Further, "protrusion volume" and "protrusion width x, y and height z" of the present invention may be measured, for example, by enlarging the tread surface with an electronic microscope.

For the tire, it is preferable that the ten-point average roughness Rz of the tread surface of the tire with protrusions with a hemisphere shape formed thereon is 1.0 to 50µm. By setting Rz to be 1.0µm or more, the gap for water removing may be ensured, while by setting Rz to be 50µm or less, the contacting area with the road surface may be ensured. Hereby, it is possible to further improve the on-ice performance and on-snow performance of the tire. Further, "ten-point average roughness Rz" refers to a value measured in accordance with the provisions of JIS B0601(1994), whereof the reference length is 0.8mm, and the evaluation length is 4mm.

In addition, it is preferable that the average distance S between local peaks of the protrusions formed on the tread surface of the tire is set to be 5.0 to 100µm. The reason is that by setting the average distance S to be 5.0µm or more, the gap for water removing may be ensured, while by setting the average distance S to be 100µm or less, the contacting area with the road surface may be ensured. Hereby, it is possible to further improve the on-ice performance and on-snow performance of the tire.
As used herein, the term "average distance between local peaks" refers to a value measured in accordance with the provisions of JIS B0601(1994), whereof the reference length is 0.8mm, and the evaluation length is 4mm.

Additionally, the aforementioned tire is not particularly limited and may be manufactured with the following tire forming mold. Further, the forming of the tire utilizing the following tire forming mold may be performed with ordinary methods.

### <tire forming mold>

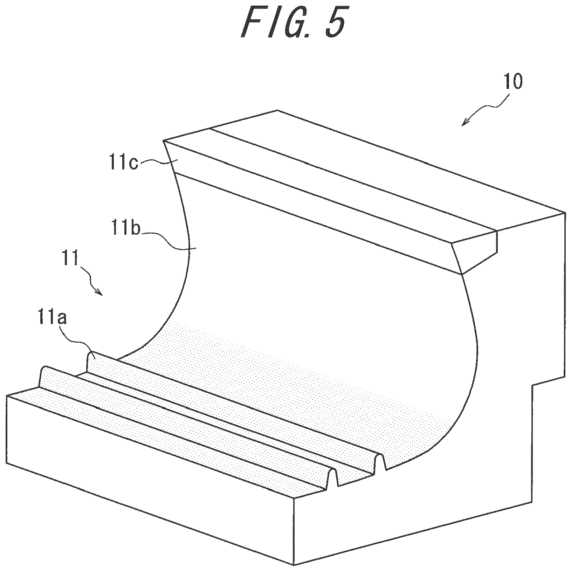

FIG. 5 is a schematic partial perspective view showing a part of the tire forming mold utilized in forming the tire of the present invention.

As is shown in FIG. 5, the mold 10 has a molding surface 11 for vulcanization molding of a tire. The molding surface 11 has a tread-surface molding surface 11a for molding the tread surface, and according to the examples as shown, it also has a sidewall molding surface 11b for molding the outside surface of a sidewall portion, and a bead-portion molding surface 11c for forming the outside surface of the bead portion. The forming surface 11 is not particularly limited, and may be formed with aluminum, for example.

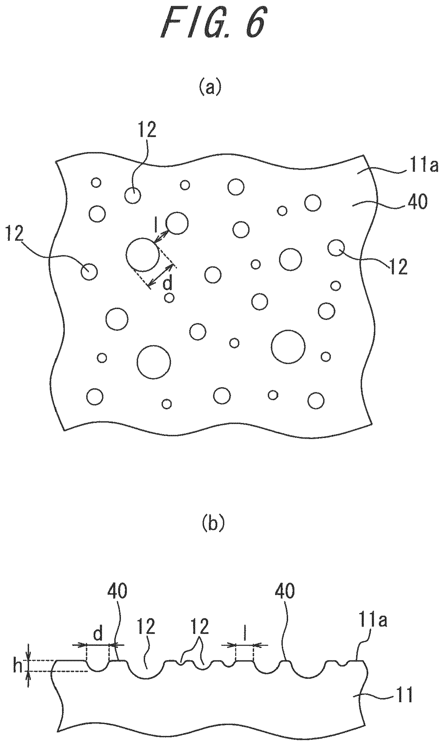

The tread surface of the tire of the present invention having the aforementioned surface properties may be formed with tire forming mold 10 comprising a tread-surface molding surface 11a having the surface properties according to said surface properties. Specifically, as shown in the enlarged plan view of the tread-surface molding surface 11a in FIG. 6(a) and in the enlarged cross-sectional view taken along the width direction of the tire forming mold 10 on the tread-surface molding surface 11a side in FIG. 6(b), the tire forming mold 10 according to the present embodiment has a large number of recesses 12 partitioned with protrusions 40 extending in a mesh pattern on the entire tread-surface molding surface 11a of the mold 10. Further, although FIG. 6 illustrates that the recesses 12 are recesses with a hemisphere shape.

In the vulcanization process of the tire utilizing the mold 10, the hemisphere shape of the recesses of tread-surface molding surface 11a of the mold 10 is transferred from the shape of the protrusions of the tread surface of the tire. Additionally, micro recesses 12 partitioned with protrusions (projections) 40 extending in a mesh pattern are formed on the tread surface of the manufactured tire, whereof the width of the protrusions is 50µm or less. In this way, by forming a large number of recesses partitioned by protrusions extending in a mesh pattern on at least a part of the tread forming surface, and setting the width 1 of the protrusions 40 to be 50µm or less, it is possible to form a tire excellent in on-ice performance and on-snow performance and having a recess extending in a mesh pattern with a predetermined width (50µm or less) on at least a part of the tread surface.
As used herein, the term "protrusion width" refers to the minimum distance across the protrusion between adjacent recesses in plan view of the tread-surface molding surface. In addition, "recess external diameter" refers to the maximum diameter of the recess in plan view of the tread-surface molding surface. And the "protrusion width" and "recess external diameter" may be measured, for example, by imaging the tread-surface molding surface with an electronic microscope.

In addition, it is preferable that the width 1 of the protrusions 40 is 5µm or more. In this way, if the width 1 of the protrusions 40 on the tread-surface molding surface is set to be 5µm or more, it is possible to ensure that gaps are provided by the recesses on the tread surface of the manufactured tire for ensuring drainage performance.

It is preferable that the external diameter d of the recesses 12 is set to be 5µm to 70µm in the mold of the present invention. By setting the external diameter d of recess 12 to be in the aforementioned range, it is possible to ensure the rigidity of the protrusions 9, and simultaneously improve the drainage performance on the tread surface of the tire, by ensuring the volume of the gaps among the protrusions 9.

Here, the protrusion width of the tread-surface molding surface of the mold may be controlled by adjusting the particle size of the blast materials. Specifically, by increasing the particle size of the blast materials, the width of the protrusions may be reduced. In addition, the recess external diameter may be controlled by adjusting the particle size of the blast materials. Specifically, by increasing the particle size of the blast materials, the recess external diameter may become larger.

The method for molding the tread-surface molding surface 11a of mold 10 will be explained hereinafter.
The aforementioned tread-surface molding surface 11a may be formed via a blast material blasting process whereby blast materials of a particular shape are blasted and forced to impact the molding surface. Additionally, the tire forming mold obtained via the blast material blasting process may have a large number of aforementioned recesses 12 partitioned by protrusions 40 extending in a mesh pattern on at least a part of the tread-surface molding surface, and has a large number of protrusions 40 with a width 1 of 50µm or less, and therefore, the tread surface of the tire which is subjected to vulcanization molding utilizing the mold may have a large number of aforementioned protrusions (projections) 9 partitioned by recesses 30 extending in a mesh pattern on at least a part of the tread-surface molding surface, and have a large number of recesses 30 with a width 1 of 50µm or less.

Here, in the blast material blasting process, it is preferable that the aforementioned tread-surface molding surface 11a (entirely or partially) is formed by blasting spherical blast materials with a sphericity of 15µm or less and forcing the same to impact the molding surface. This is because that by setting the sphericity of the blast materials to be 15µm or less, recesses with desired properties may be formed on the tread-surface molding surface of the mold. It is possible to set the tread surface of the tire formed by utilizing the mold to be a desired surface shape.

In addition, it is more preferable that the sphericity of the blast materials herein is set to be 10µm or less. A large number of recesses with desired properties may be easily formed on the tread-surface molding surface of the mold by setting the sphericity of the blast materials to be 10µm or less, and consequently, it is possible to form tires with further improved on-ice performance and on-snow performance by forming a large number of protrusions with a desired shape on the tread surface of the tire formed by utilizing the mold.
Further, it is more preferable that the sphericity of the blast materials herein is set to be 5µm or less. By setting the sphericity of the blast materials to be 5µm or less, recesses with desired properties may be more easily formed on the tread-surface molding surface of the mold.

In addition, it is preferable that the average particle size of the blast materials utilized in the blast material blasting process is set to be 10µm to 1mm. By setting the average particle size of the blast materials to be 10µm or more, a mold having desired recess shape may be obtained on the tread-surface molding surface more easily, and in the blast material blasting process, it is possible to suppress the splashing around of the blast materials in the case of high-pressure blasting. On the other hand, by setting the average particle size of the blast materials to be 1mm or less, it is possible to suppress the rapid wearing of the mold surface.
For the same reason, it is more preferable that the average particle size of the blast materials is set to be 20µm to 0.7mm, still more preferably 30µm to 0.5mm.
As used herein, the term "average particle size" refers to the value obtained by imaging blasting materials with SEM, then randomly taking out 10 blasting materials therefrom, obtaining the average value of the diameter of the inscribed circle and the diameter of the circumscribed circle of each blast material, and averaging the results of the 10 blast materials.

Here, it is preferable that the Mohs hardness of the blast materials is set to be 2 to 10. By setting the Mohs hardness of the blast materials to be 2 or more, a mold having desired recess shape may be obtained on the tread-surface molding surface more easily. On the other hand, by setting the Mohs hardness of the blast materials to be 10 or less, the mold may be less prone to rapid deterioration.
For the same reason, it is more preferable that the Mohs hardness of the blast materials is set to be 3.0 to 9.0, still more preferably 5.0 to 9.0. In addition, it is preferable that the Mohs hardness of the tread-surface molding surface of the tire forming mold is set to be 2.0 to 5.0, and that the difference between the Mohs hardness of the tread-surface molding surface of the tire forming mold and the Mohs hardness of the blast materials is set to be 3.0 to 5.0.

In addition, it is preferable that the specific gravity of the blast materials is set to be 0.5 to 20. This is because that by setting the specific gravity of the blast materials to be 0.5 or more, the operability may be improved by suppressing the splashing of the blast materials in the blasting process. On the other hand, by setting the specific gravity of the blast materials to be 20 or less, it is possible to reduce the energy needed for accelerating the blast materials, and to suppress the rapid wearing of the mold. For the same reason, it is more preferable that the specific gravity of the blast materials is set to be 0.8 to 18, still more preferably 1.2 to 15.

The material of the blast materials is not particularly limited, and it is preferable to utilize, for example, gyricon, iron, cast steel or ceramics as the material.

Here, in the blast material blasting process, it is preferable that the blast materials are blasted with high-pressure air of 100 to 1000kPa onto the tread-surface molding surface of the aforementioned mold for 30 seconds to 10 minutes.
By blasting the blast materials for 30 seconds or more under a pressure of 100kPa or more, it is possible to make the tread-surface molding surface into the aforementioned desired shape thoroughly, while by blasting the blast materials for 10 minutes or less under a pressure of 1000kPa or less, it is possible to suppress the damage to the tread-surface molding surface.
In addition, it is preferable that the blasting speed of the blast materials is set to be 0.3 to 10(m/s), more preferably 0.5 to 7(m/s), by adjusting the specific gravity and blasting pressure of the material. In this case, it is preferable that the distance between the nozzle for blasting the blast materials and the tire forming mold is set to be 50 to 200(mm).
Further, the aforementioned blasting time of the blast materials refers to the blasting time for a single mold, for example, in the case that a single tire is formed utilizing 9 molds, it is preferred that blast materials are blasted for 270 seconds to 90 minutes in total onto the tread-surface molding surfaces of the 9 molds for forming the single tire.
In addition, the blasting of the blast materials onto the tread-surface molding surface of a single mold may be performed by the operator displacing the blasting position while considering the shape of the mold, etc. In this way, it is possible to blast the blast materials more uniformly.

In addition, in the mold 10, the shape of each recess 12 is hemispherical. This is because that by shaping each recess 12 into a hemispherical shape, it is possible to form protrusions 9 of hemispherical shape on the tread surface of the tire. Note that it is possible to control the shape of each recess 12 by adjusting the particle size, the blasting speed and the blasting angle of the blast materials.

Further, in the mold 10, the depth h of each recess 12 is set to be 1 to 50µm. By setting the depth h of each recess 12 to be 1 to 50µm, it is possible to form protrusions 9 with a height of 1 to 50µm on the tread surface of the tire. Further, it is possible to control the depth h of each recess 12 by adjusting the blasting speed of the blast materials. Specifically, if the blasting speed of the blast materials is increased, the depth h may be increased. Further, the depth of each recess 12 refers to the distance along the radial direction between a third imaginary plane perpendicular to a radial direction line extending across the deepest portion (the inner end in the radial direction) of the recess 12 and a fourth imaginary plane closest to the third imaginary plane among the imaginary planes contacting the outer contour line of the recess 12 and perpendicular to the radial direction line. Note that the term "radial direction" refers to a direction corresponding to the radial direction of the toroidal tread-surface molding surface, namely a direction corresponding to the tire radial direction of the tire formed by utilizing the mold 10. Additionally, the depth of recesses 12 may be measured with an SEM or microscope.

In addition, the mold 10 is a mold for tire forming, having a tread-surface molding surface for molding the tread surface of the tire, and it is preferable that plural protrusions are formed with a number density of 80 to 320/mm² on at least a part of the tread-surface molding surface. In this way, it is possible to form tires excellent in on-ice performance and on-snow performance, while suppressing the reduction of block rigidity and drainage performance.

Here, for the mold of the present invention, it is preferable that the recesses are formed with a number density of 80 to 320/mm² in the range of 90% or more of the area of the tread surface. If the recesses are formed to cover 90% or more of the tread surface with a predetermined number density, it is possible to form a sufficient number of protrusions on the tread surface of the tire.
In addition, in the mold 10, it is more preferable that the number density of the recesses 12 is 150 to 250/mm². By setting the number density of the recesses 12 to be 150 to 250/mm², it is possible to form protrusions 9 with a number density of 150 to 250/mm² on the tread surface of the tire.

Further, it is possible to control the number density of the recesses 12 by adjusting the particle size and particle number of the blasting materials. Specifically, if the particle size of the blast material is increased, the number density may be increased. In addition, if the particle size of the blast materials is increased, the number density may be reduced.

Further, the mold 10 is a tire forming mold having a tread-surface molding surface for molding the tread surface of the tire, and recesses with a volume of 4×10⁵µm³ or more are formed with a number density of 80/mm² or more on at least a part of the tread-surface molding surface, and that the following conditions are satisfied: x'≤200µm, y'≤200µm and 1<z'≤50µm, where x' represents a first width (µm) which is the maximum width of each of the aforementioned recesses, y' represents a second width (µm) which is the maximum width of each of the recesses along the direction perpendicular to the direction in which the first width is measured, and z' represents the depth (µm) of each of the recesses.
In this way, it is possible to form a tire that is excellent in on-ice performance and on-snow performance having protrusions formed on at least a part of the tread surface with a volume of 4×10⁵µm³ or more and with a number density of 80/mm² or more, satisfying the conditions that x≤200µm, y≤200µm and 1<z≤50µm.
Further, it is possible to control the number density of recesses 12 by adjusting the particle size and particle number. Specifically, if the particle number of the blast materials is increased, the number density may be increased. In addition, if the particle size of the blast materials is increased, the number density may be lowered. In addition, it is possible to control the volume of recesses 12 by adjusting the blasting speed of the blast materials. Specifically, if the blasting speed of the blast materials is increased, the volume may be increased.

Here, for the mold, it is preferable that on the part with recesses 12 formed thereon, for the same reason, the number density of those recesses, each having a volume of 4×10⁵µm³ or more and satisfying the conditions that x'≤200µm, y'≤200µm and 1<z'≤50µm becomes 150/mm² or more, and more preferably 150/mm² or more and less than 250/mm². In addition, it is preferable that the recess volume is 5×10⁵µm³ or more.
Note that the "recess volume" and the "recess width x', y' and height z'" in the present invention may be measured, for example, by enlarging the tread-surface molding surface with a microscope.

Here, it is preferable that the ten-point average roughness Rz of the tread-surface molding surface of the mold is 1.0 to 50µm. This is because that it is possible to form a tire with a ten-point average roughness Rz of the tread surface of 1.0 to 50µm.
Note that by setting the average particle size of the blast materials used in the blast material blasting process to be 50 to 400µm, it is possible to produce a tire-forming mold provided with a tread-surface molding surface having a ten-point average roughness Rz in the aforementioned range.

In addition, it is preferable that the average distance between local peaks of recesses of the tread-surface molding surface of the mold is 5.0 to 100µm. This is because that it is possible to form a tire with an average distance S of 5.0 to 100µm between local peaks of protrusions formed on the tread surface of the tire.
Further, by setting the average particle size of the blast materials utilized in the blast material blasting process to be 50 to 400µm, it is possible to obtain a tire forming mold including a tread-surface molding surface having an average distance in the aforementioned range.

The foregoing has explained an embodiment of the present invention with reference to the drawings. However, the tire and the tire forming mold of the present invention is not particularly limited to the disclosed embodiment, and appropriate changes may be made to the tire and the tire forming mold of the present invention.

### EXAMPLES

The present invention will be explained in further detail below according to examples, although the present invention is not limited to the disclosed examples.

### (Manufacture of tire forming mold)

Tire forming molds 1 to 5 having tread-surface molding surfaces with surface properties as shown in Table 1 were manufactured by blasting (ceramic-based) blast materials to the tread-surface molding surfaces of tire forming molds made from aluminum, while changing the blasting conditions (such as blasting pressure and blasting speed). Further, the surface properties of the tread surfaces of the manufactured molds were measured with an SEM and microscope.

**[Table 1]**

| | Mold 1 | Mold 2 | Mold 3 | Mold 4 | Mold 5 |
|---|---|---|---|---|---|
| | Conventional Example | Example | Example | Example | Example |
| Presence/absence of recesses | Absence | Presence | Presence | Presence | Presence |
| Shape of recesses | - | Hemisphere | Hemisphere | Hemisphere | Hemisphere |
| Protrusion width between recesses (Distance between recesses) [µm] | - | 5.0 | 0.22 | 2.5 | 0.22 |
| Recess external diameter [µm] | - | 150 | 20 | 50 | 20 |
| Recess external diameter/ Distance between recesses [-] | - | 30 | 90 | 20 | 90 |
| Recess number density [/mm²] | - | 60 | 230 | 190 | 200 |
| Recess occupancy in 200µm×200µm×50µm [Volume percentage] | - | 10% | 30% | 30% | 30% |

### (Manufacture of tire)

Tires 1 to 5 of tire size 205/55R16 were manufactured according to ordinary methods, by utilizing the manufactured tire forming molds 1 to 5, respectively. Additionally, the surface properties of the tread surfaces of the manufactured tires were measured by utilizing an SEM and a microscope. The results are as shown in Table 2.

In addition, the on-ice performance and on-snow performance of each manufactured tire were evaluated with the evaluation method as follows. The results are as shown in Table 2.

### <On-ice performance>

As soon as each tire was manufactured, the tire was mounted on an approved rim, filled with a normal internal pressure specified by JATMA and installed onto a vehicle. Then, the on-ice friction coefficient was measured under the conditions of 4.3KN load on each front wheel and a speed of 30km/h on icy road. The on-ice friction coefficient of each tire was evaluated, with a score of 100 representing the on-ice friction coefficient of tire 1. The results are as shown in Table 2. The larger the value, the higher the on-ice friction coefficient is and the more excellent the on-ice performance is, as is shown in Table 2.

### <On-snow performance>

As soon as each tire was manufactured, the tire was mounted on an approved rim, filled with a normal internal pressure specified by JATMA and installed onto a vehicle. Additionally, the on-snow friction coefficient is measured under the conditions of 4.3KN load on each front wheel and a speed of 30km/h on snowy road. The on-snow friction coefficient of each tire was evaluated, with a score of 100 representing the on-snow friction coefficient of tire 1. The results are as shown in Table 2. The larger the value, the higher the on-snow friction coefficient is and the more excellent the on-snow performance is, as is shown in Table 2.

**[Table 2]**

| | Tire 1 | Tire 2 | Tire 3 | Tire 4 | Tire 5 |
|---|---|---|---|---|---|
| | Conventional Example | Example | Example | Example | Example |
| Presence/absence of protrusions | Absence | Presence | Presence | Presence | Presence |
| Shape of protrusions | - | Hemisphere | Hemisphere | Hemisphere | Hemisphere |
| Recess width between protrusions (Distance between protrusions) [µm] | - | 5.0 | 0.22 | 2.5 | 0.22 |
| Protrusion external diameter [µm] | - | 150 | 20 | 50 | 20 |
| Protrusion external diameter/ Distance between protrusions [-] | - | 30 | 90 | 20 | 90 |
| Protrusion number density [/mm²] | - | 60 | 230 | 190 | 200 |
| Protrusion occupancy in 200pm×200pm×50pm [Volume percentage] | - | 10% | 30% | 30% | 30% |
| On-ice performance | 100 | 98 | 115 | 112 | 110 |
| On-snow performance | 100 | 99 | 112 | 110 | 108 |

It can be understood that comparing to tires according to the conventional example and the comparative example, the tire according to the examples of the present invention is more excellent in on-ice performance and on-snow performance, as is shown in Table 2.

### INDUSTRIAL APPLICABILITY

According to the present invention, it is possible to provide a tire with improved on-ice performance and on-snow performance and also a tire forming mold that can be used for forming the same.

### REFERENCE SIGNS LIST

- 1: tread portion
- 2: protrusion
- 3: gap
- 4: bead portion
- 4a: bead core
- 5: sidewall portion
- 6: tread portion
- 6a: surface
- 7: carcass
- 8: belt
- 8a, 8b: belt layer
- 9: protrusion
- 10: mold
- 11: molding surface
- 11a: tread-surface molding surface
- 11b: sidewall molding surface
- 11c: bead-portion molding surface
- 12: recess
- 20: tire
- 30: recess (in a mesh pattern)
- d: recess external diameter
- l: protrusion width (distance between recesses)
- D: protrusion external diameter
- L: recess width (distance between protrusions)
- T: road surface

## Claims

1. A tire (20) comprising protrusions (9) partitioned by recesses (30) extending in a mesh pattern on at least a part of a tread surface of the tire,
wherein each of the recesses has a recess width (L) of 50µm or less; the protrusions have a hemispherical shape; and
the protrusions have a volume of 4×10⁵µm³ or more and a number density of 80/mm² or more, and the conditions that x≤200µm, y≤200µm, and z is 1µm up to and including 50µm are satisfied, where x is a first width (µm) which represents the maximum width of each protrusion, y is a second width (µm) which represents the maximum width of the protrusion in the direction perpendicular to the direction in which the first width is measured, and z is the height (µm) of the same.

2. A tire according to claim 1 wherein on at least a part of the tread surface of the tire (20), the protrusions (9) are formed with a number density of 80 to 320/mm².

3. A tire forming mold (10) comprising:
a tread-surface molding surface (11a) for molding a tread surface of a tire (20); and
recesses (12) formed on at least a part of the tread-surface molding surface and partitioned by protrusions extending in a mesh pattern,
wherein each of the protrusions has a protrusion width (1) of 50µm or less;
the recesses have a hemispherical shape; and the recesses have a volume of 4×10⁵µm³ or more and a number density of 80/mm² or more, and the conditions: x'≤200µm, y'≤200µm and z' is 1µm up to and including 50µm are satisfied, where x' represents a first width (µm) which is the maximum width of each of the aforementioned recesses, y' represents a second width (µm) which is the maximum width of each of the recesses along the direction perpendicular to the direction in which the first width is measured, and z' represents the depth (µm) of each of the recesses.

4. A tire forming mold (10) according to claim 3 wherein on at least a part of the tread surface of the tire (20), the recesses (12) are formed with a number density of 80 to 320/mm².

5. The tire forming mold (10) according to claim 3 wherein the tread-surface molding surface (11a) is formed via a blast material blasting process whereby blast materials of a particular shape are blasted and forced to impact the molding surface.

6. The tire forming mold (10) according to claim 5 wherein the tread-surface molding surface (11a), entirely or partially, is formed by blasting spherical blast materials with a sphericity of 15µm or less and forcing the same to impact the molding surface.

7. The tire forming mold (10) according to claim 5 wherein the average particle size of the blast materials utilized in the blast material blasting process is set to be 10µm to 1mm.

8. The tire forming mold (10) according to claim 5 wherein the specific gravity of the blast materials is set to be 0.5 to 20.

## Patentansprüche

1. Reifen (20), beinhaltend Protrusionen (9), geteilt durch Vertiefungen (30), welche sich in einem Netzmuster über mindestens einen Abschnitt einer Lauffläche des Reifens erstrecken,
wobei jede der Vertiefungen eine Vertiefungsbreite (L) von 50 µm oder darunter aufweist;
die Protrusionen eine Halbkugelform aufweisen; und
die Protrusionen ein Volumen von 4x10⁵ µm³ oder darüber und eine Anzahldichte von 80/mm² oder darüber aufweisen, und die Voraussetzungen, dass x ≤ 200 µm, y ≤ 200 µm, und z 1 µm bis einschließlich 50 µm beträgt, erfüllt sind, wobei x eine erste Breite (µm) ist, welche die maximale Breite einer jeden Protrusion darstellt, y eine zweite Breite (µm) ist, welche die maximale Breite der Protrusion in der Richtung rechtwinklig zu derjenigen Richtung ist, in welcher die erste Breite gemessen wird, und z die Höhe (µm) derselben ist.

2. Reifen nach Anspruch 1, bei welchem an mindestens einem Abschnitt der Lauffläche des Reifens (20) die Protrusionen (9) mit einer Anzahldichte von 80 bis 320/mm² gebildet sind.

3. Reifenform (10), Folgendes beinhaltend:
eine Laufflächenformfläche (11a) zum Formen einer Lauffläche eines Reifens (20); und
Vertiefungen (12), welche an mindestens einem Abschnitt der Laufflächenformfläche gebildet sind und durch Protrusionen geteilt werden, welche sich in einer Netzform erstrecken,
wobei jede der Protrusionen eine Protrusionsbreite (1) von 50 µm oder darunter aufweist;
die Vertiefungen eine Halbkugelform aufweisen; und
die Vertiefungen ein Volumen von 4x10⁵ µm³ oder darüber und eine Anzahldichte von 80/mm² oder darüber aufweisen, und die Voraussetzungen: x' ≤ 200 µm, y' ≤ 200 µm, und z' beträgt 1 µm bis einschließlich 50 µm, erfüllt sind, wobei x' eine erste Breite (µm) darstellt, welche die maximale Breite einer jeden der vorstehend genannten Vertiefungen ist, y' eine zweite Breite (µm) darstellt, welche die maximale Breite einer jeden der Vertiefungen in der Richtung rechtwinklig zu derjenigen Richtung ist, in welcher die erste Breite gemessen wird, und z' die Tiefe (µm) einer jeden der Vertiefungen darstellt.

4. Reifenform (10) nach Anspruch 3, bei welcher mindestens an einem Abschnitt der Lauffläche des Reifens (20) die Vertiefungen (12) mit einer Anzahldichte von 80 bis 320/mm² gebildet sind.

5. Reifenform (10) nach Anspruch 3, bei welcher die Laufflächenformfläche (11a) via einen Strahlmittel-Strahlprozess gebildet wird, wobei Strahlmittel einer bestimmten Form gestrahlt und gezwungen werden, auf der Formfläche aufzuprallen.

6. Reifenform (10) nach Anspruch 5, bei welcher die Laufflächenformfläche (11a) ganz oder teilweise durch das Strahlen von kugelförmigen Strahlmitteln mit einer Rundheit von 15 µm oder darunter gebildet wird, und dadurch, dass dieses dazu gezwungen wird, auf der Formfläche aufzuprallen.

7. Reifenform (10) nach Anspruch 5, bei welcher die mittlere Partikelgröße des im Strahlmittel-Strahlprozess verwendeten Strahlmittels auf 10 µm bis 1 mm festgelegt ist.

8. Reifenform (10) nach Anspruch 5, bei welcher die spezifische Schwerkraft des Strahlmittels auf 0,5 bis 20 festgelegt ist.

## Revendications

1. Bandage pneumatique (20), comprenant des protubérances (9) séparées par des évidements (30) s'étendant dans un motif en maille sur au moins une partie d'une surface de bande de roulement du bandage pneumatique ;
dans lequel chacun des évidements a une largeur d'évidement (L) de 50 µm ou moins ;
les protubérances ont une forme hémisphérique ; et
les protubérances ont une volume de 4 x 10⁵ µm³ ou plus et une densité de nombre de 80/mm² ou plus, les conditions selon lesquelles x ≤ 200 µm, y ≤ 200 µm, et z est compris entre 1 µm et 50 µm inclus étant satisfaites, x étant une première largeur (µm) représentant la largeur maximale de chaque protubérance, y étant une deuxième largeur (µm) représentant la largeur maximale de la protubérance dans la direction perpendiculaire à la direction dans laquelle le première largeur est mesurée, et z étant la hauteur (µm) de celle-ci.

2. Bandage pneumatique selon la revendication 1, dans lequel, sur au moins une partie de la surface de bande de roulement du bandage pneumatique (20), les protubérances (9) sont formées avec une densité de nombre comprise entre 80 et 320/mm².

3. Moule de formation d'un bandage pneumatique (10), comprenant :
une surface de moulage de la surface de bande de roulement (11a) pour mouler une surface de bande de roulement d'un bandage pneumatique (20) ; et
des évidements (12) formés sur au moins une partie de la surface de moulage de la surface de bande de roulement et séparées par des protubérances s'étendant dans un motif en maille ;
dans lequel chacune des protubérances a une largeur de protubérance (1) de 50 µm ou moins ;
les évidements ont une forme hémisphérique ; et
les évidements ont un volume de 4 x 10⁵ µm³ ou plus et une densité de nombre de 80/mm² ou plus, les conditions selon lesquelles x' ≤ 200 µm, y' ≤ 200 µm, et z' est compris entre 1 µm et 50 µm inclus étant satisfaites, x' représentant une première largeur (µm) constituant la largeur maximale de chacun des évidements ci-dessus, y' représentant une deuxième largeur (µm) constituant la largeur maximale de chacun des évidements le long de la direction perpendiculaire à la direction dans laquelle le première largeur est mesurée, et z' représentant la profondeur (µm) de chacun des évidements.

4. Moule de formation d'un bandage pneumatique (10) selon la revendication 3, dans lequel, sur au moins une partie de la surface de bande de roulement du bandage neumatique (20), les évidements (12) sont formés avec une densité de nombre comprise entre 80 et 320/mm².

5. Moule de formation d'un bandage pneumatique (10) selon la revendication 3, dans lequel la surface de moulage de la surface de bande de roulement (11a) est formée par l'intermédiaire d'un processus de soufflage de matériau de soufflage, des matériaux de soufflage d'une forme spécifique étant ainsi soufflés et entraînés à impacter sur la surface de moulage.

6. Moule de formation d'un bandage pneumatique (10) selon la revendication 5, dans lequel la surface de moulage de la surface de bande de roulement (11a) est formée entièrement ou en partie par soufflage de matériaux de soufflage sphériques, présentant une sphéricité de 15 µm ou moins et en entraînant ceux-ci à impacter sur la surface de moulage.

7. Moule de formation d'un bandage pneumatique (10) selon la revendication 5, dans lequel la dimension de particule moyenne des matériaux de soufflage utilisés dans le processus de soufflage de matériau de soufflage, est ajustée de sorte à être comprise entre 10 µm et 1 mm.

8. Moule de formation d'un bandage pneumatique (10) selon la revendication 5, dans lequel la gravité spécifique des matériaux de soufflage est ajustée de sorte à être comprise entre 0,5 et 20.
